# EUROPEAN PATENT SPECIFICATION

(11) **EP 3 073 099 B1**
(45) Date of publication and mention of the grant of the patent: **02.05.2018**
(21) Application number: 15160397.4
(22) Date of filing: 23.03.2015
(51) Int. Cl.: F02D 19/10, F02B 31/04, F02B 31/06

(54) **ADAPTING FLOW DYNAMICS FOR INTERNAL COMBUSTION ENGINES**
ANPASSUNG DER FLUSSDYNAMIK FÜR VERBRENNUNGSMOTOREN
ADAPTATION DYNAMIQUE DE DÉBIT POUR MOTEURS À COMBUSTION INTERNE

(43) Date of publication of application: 28.09.2016
(73) Proprietor: Caterpillar Motoren GmbH & Co. KG, 24159 Kiel (DE)
(72) Inventor: HOLST, Hauke, 24161 Altenholz (DE); SIXEL, Eike Joachim, 24109 Kiel (DE)
(74) Representative: Kramer Barske Schmidtchen Patentanwälte PartG mbB

(56) References cited:
- EP-A2- 1 006 266
- JP-A- 2010 144 516
- US-A1- 2002 073 704
- US-A1- 2014 352 656

## Description

### Technical Field

The present disclosure generally relates to an internal combustion engine, and more particularly, to a flow dynamic adjusted internal combustion engine with a pre-(combustion) and main-(combustion) chamber, and a related method for operating an internal combustion engine.

### Background

Internal combustion engines can emit harmful oxides of nitrogen ("NOx") during operation. Those oxides form when nitrogen and oxygen, both of which are present in the charge air used for combustion, react within the main combustion chamber. Typically, the level of NOx formed increases as the peak combustion temperatures within the combustion chambers increase. As such, minimizing the peak combustion temperatures within the main combustion chamber generally reduces the emission of NOx. Leaner charge air-gaseous fuel mixtures may reduce the peak combustion temperatures in the main combustion chamber, thus may reduce the amount of harmful NOx emitted.

Although a lean charge air-gaseous fuel mixture may - due to its relatively large air-to-fuel ratio when compared to a gas mixture having a stoichiometric air-to-fuel ratio by using more air in the mixture - advantageously lower NOx emissions, it also may result in an incomplete combustion within the main combustion chamber and a poor ignitability of the charge air-gaseous fuel mixture.

Pre-combustion chamber systems may be used to minimize the occurrence of incomplete combustion. In general, a pre-combustion chamber is in fluid communication with the main combustion chamber of the internal combustion engine via small flow transfer passages. Ignition of the fuel within the pre-combustion chamber creates a flame front of burning fuel that is jetted through the flow transfer passages into the main combustion chamber, where respective ignition jets ignite the lean charge air-gaseous fuel mixture within the main combustion chamber.

Although the flame front of burning ignition jets may generally be sufficient to cause complete combustion of the lean charge air-gaseous fuel mixture within the main combustion chamber, in general the enriched pre-chambers itself may produce a large amount of NOx-emissions caused by the stoichiometric or under stoichiometric combustion within the pre-combustion chamber.

An exemplary internal combustion engine, in particular configured with a throttling control in the intake port, is disclosed in US 2014/0352656 A1. Moreover, an internal combustion engine with a cylinder specific additional air compression is disclosed in US 2002/0073704 A1, wherein in particular also an air flow characteristics in the combustion chamber for particular engine applications is disclosed.

JP2010144516A discloses a gas engine wherein lean air and gaseous fuel mixture is introduced within the combustion chamber, and ignited by a liquid injection in the pre-combustion chamber, which presents flow passages inclined with respect to a radial direction of the pre-combustion chamber.

The present disclosure is directed, at least in part, to improving or overcoming one or more aspects of prior systems.

### Summary of the Disclosure

The invention relates to an internal combustion engine according to independent clam 1.

The invention also relates to a method for operating an internal combustion engine at least partly on gaseous fuel under adjusted flow dynamics of the pre-combustion chamber and the main combustion chamber comprises the steps of providing ignition jets of burning charge air-gaseous fuel mixture, or of burning charge air-gaseous fuel mixture in combination with burning Diesel sprays into a main combustion chamber of the internal combustion engine along injection directions being azimuthally inclined with respect to respective radial directions, and generating a flow system of the charge air-gaseous fuel mixture within the main combustion chamber, the flow system including counter flow sections that at least partly spatially overlap with the ignition jets and have a flow direction directed at least partially against the respective injection directions.

Other features and aspects of this disclosure will be apparent from the following description and the accompanying drawings.

### Brief Description of the Drawings

The accompanying drawings, which are incorporated herein and constitute a part of the specification, illustrate exemplary embodiments of the disclosure and, together with the description, serve to explain the principles of the disclosure. In the drawings:
Fig. 1 is a schematic drawing of a section of an internal combustion engine, specifically of a section of the engine block covered by a cylinder head with a pre-combustion chamber assembly;
Fig. 2 is a schematic top view into the main combustion chamber of an internal combustion engine for illustrating the flow dynamics;
Fig. 3 is a schematic illustration of a section of the charge air system including two intake valves;
Fig. 4 is an axial view of a swirl generating section of a valve stem-valve head unit;
Fig. 5 is a 3D-view of the valve stem-valve head unit of Fig. 4;
Figs. 6 and 7 show exemplary cross sections for an intake channel system for valve stem based enforcing of a swirl;
Figs. 8 and 9 show exemplary cross sections for an intake channel system for intake channel based enforcing of a swirl; and
Fig. 10 illustrates schematically a tiltable swirl generating element.

### Detailed Description

The present disclosure is based in part on the realization that - when igniting a lean charge air-gaseous fuel mixture in a main chamber by ignition jets - in particular the quality of the ignition process is based on the contact-zone provided for the ignition jets and the lean charge air-gaseous fuel mixture and the turbulence level in those contact-zones. It was further realized that in particular the amount of ignited lean charge air-gaseous fuel mixture depends on the ignition jet penetration and the relative velocity between the ignition jets and the lean charge air-gaseous fuel mixture.

The present disclosure is further based in part on the realization that, to further reduce NOx-emission, the energy combusted within the pre-combustion chamber may be further decreased, while the same ignition performance is maintained. It was further realized that the latter may be achieved by increasing the relative velocity between the ignition jets and the lean charge air-gaseous fuel mixture and by that the turbulence level in the respective contact-zone.

The present disclosure is further based in part on the realization that one may align the relative flows between the ignition jets and the charge air-gaseous fuel mixture to maintain a sufficient ignition process/sufficient ignition jet penetration.

The ignition jets may be given by the ignition process parameters as well as the design of the pre-combustion chamber including the design of the flow transfer passages.

The flow system of the charge air-gaseous fuel mixture within a cylinder may comprise three types: a swirl flow and a tumble flow, or a flow field with rotation between swirl and tumble. For all types, rotational motion occurs about an axis of rotation. However, the position and orientation of the respective axis of rotation is different. For a swirl flow, the axis usually is aligned with the cylinder axis, i.e. may be more or less coincident with the cylinder axis or shifted with respect to the cylinder axis. For a tumble flow, the axis is essentially tilted with respect to the cylinder axis, e.g. perpendicular to the cylinder axis and may even be more complex such as bend or circular. Flow systems may comprise swirl flows and/or tumble flows.

In general, the formation of a respective flow system (swirl flow and/or tumble flow) may depend on the velocity of the piston when reciprocating, e.g. the engine speed and stroke amplitude, the diameter and shape of the main combustion chamber e.g. shape of piston and cylinder head, the pressure of the charge air, the timing of the valve openings including valve opening overlap between intake and exhaust valves, and the shape and directionality of the intake and/or exhaust channels.

To increase the relative velocity between the lean mixture and the jets, a flow of the charge air-gaseous fuel mixture may be provided and additionally the direction of the flows (i.e. of the ignition jets and the lean charge air-gaseous fuel mixture) may be directed at least partly against each other. For example, in the region of the overlap of the charge-air gaseous fuel mixture with one of the ignition jets, a flow of the charge air-gaseous fuel mixture may comprise a flow (vector) component that is directed against the direction of the ignition jet, thereby being directed at least partly against the ignition jet. Accordingly, the vector associated with the ignition jet and the vector associated with flow direction of the charge air-gaseous fuel mixture, when overlapping with the ignition jet understood as a respective counter flow section, extend under an angle of at least 90° (180° corresponding to being directed against each other, i.e. flows in opposite directions). For example, the vector associated with an injection direction of the ignition jet and the vector associated with the charge air-gaseous fuel mixture may extend under an angle of at least 120°, at least 135°, at least 150°, or at least 170°. In particular, the counter-flow as described above may be given for at least 50% or at least 70%, or at least 85% of the extent of the ignition jet.

For example, the direction of the ignition jet-flow may be influenced by the angle of the pre-chamber flow transfer passages, while the flow of the lean charge air-gaseous fuel mixture in the main chamber may be forced into a swirl in a manner that this flow runs against the flow of the ignition jets. Then, more lean charge air-gaseous fuel mixture may get in contact with the ignition jets and may be ignited even, for example, with leaner conditions in the pre-combustion chamber. Thus, for example, less amount of ignition energy may be needed for ignition and the mixture in the pre-combustion chamber can be made leaner. Leaner mixture in the pre-combustion chamber may lead to colder combustion temperatures and, therefore, to lower NOx-emissions.

The present disclosure is further based on the realization that a flow of the charge air-gaseous fuel mixture within the main chamber may be provided by specific directionality when charging the main combustion chamber, e.g. by tilting the intake channel and supplying the mixture with a tangential component. For example, one may enforce a specific flow due to some flow enforcing structure within the intake channel. Moreover, it was realized that a flow of the charge air-gaseous fuel mixture may be provided by enforcing a specific flow behavior within the intake channel, for example, by providing, at a valve stem of the intake valve and/or at a wall of the intake channel, a specific swirl section with at least one swirl generating element. Specifically, such rotor-like elements may be provided and the valve stem may be stabilized or counter rotated with respect to the enforced swirl, for example by a rotation and stabilization unit. Moreover, it was realized that combining two or more inlet valves with respective flow enforcing may be used to enforce a swirl within the main combustion chamber. However, the present disclosure should not be considered to be limited to the described flow enforcing technology for e.g. creating the rotational flow (swirl) in the main combustion chamber. The person skilled in the art may realize that other technologies may allow generating desired flows as well.

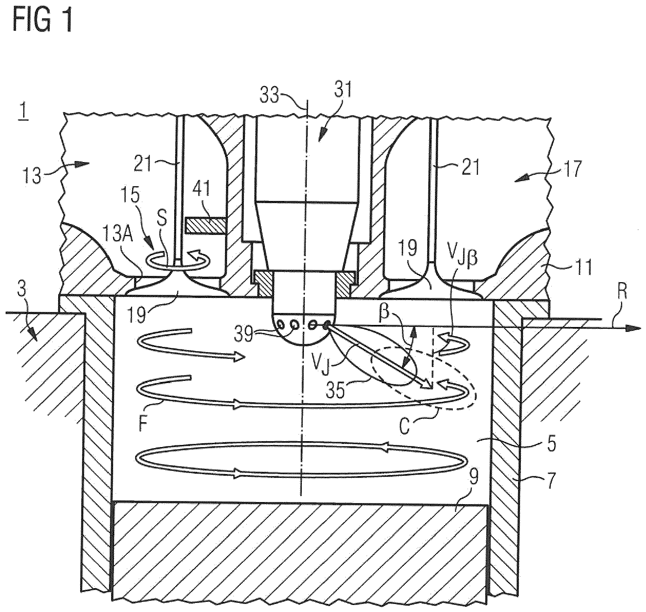

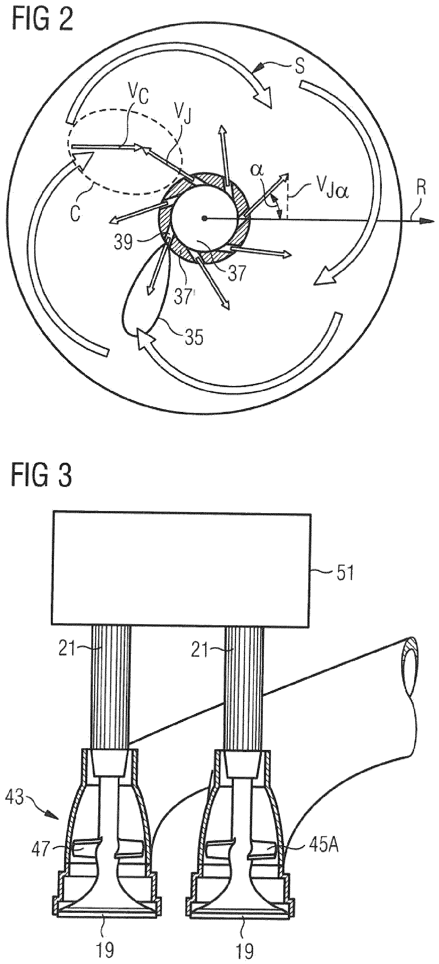

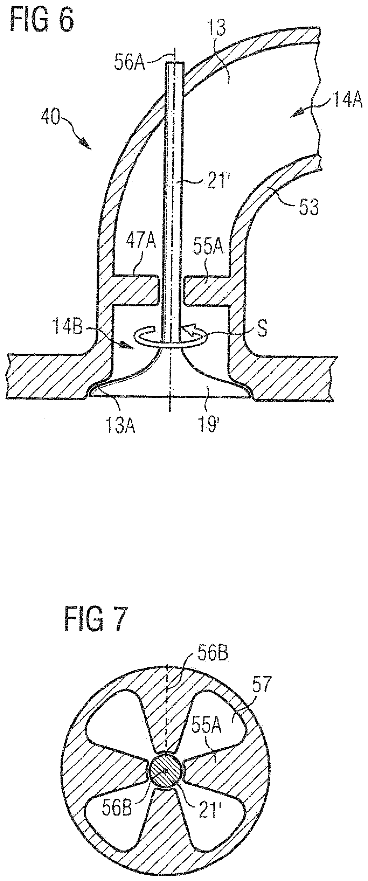

With reference to the drawings 1 to 10, the general concepts of the present disclosure are explained. In particular, the proposed counter-flow concept is explained in connection with Figs. 1 and 2 and exemplary configurations for enforcing a swirl within the main combustion chamber is disclosed in combination with Figs. 3 to 5 (valve stem based) and Figs. 6 to 10 (intake channel based).

Fig. 1 shows schematically a cylinder unit section for an internal combustion engine 1 that is operable at least partly on gaseous fuel and provides adjusted flow dynamics. Engine 1 includes, for example, one or more engine block cylinder unit sections 3, each providing a main combustion chamber 5. Main combustion chamber 5 is, for example, radially delimited by a cylinder liner 7 and axially delimited by a piston 9 and a cylinder head 11. Accordingly, cylinder head 11 covers main combustion chamber 5.

During operation of engine 1, piston 9 reciprocates in engine block cylinder unit section 3, thereby moving between a top dead center and a bottom dead center. For the purposes of the present disclosure, the internal combustion engine 1 is considered as a four-stroke internal combustion engine operating at least partly on gaseous fuel such as a gas engine or a dual fuel engine. One skilled in the art will recognize, however, that the internal combustion engine may be any type of engine that would utilize a pre-chamber assembly as disclosed herein. For example, the internal combustion engine may be a medium speed gas engine of the series GCM34 manufactured by Caterpillar Motoren GmbH & Co. KG.

Furthermore, the internal combustion engine may be of any size, with any number of cylinders, and in any configuration (V-type, in-line, radial, etc.). Moreover, the internal combustion engine may be used to power any machine or other device, including locomotive applications, on-highway trucks or vehicles, off-highway trucks or machines, earth moving equipment, generators, aerospace applications, marine applications, pumps, stationary equipment, or other engine powered applications.

As further shown in Fig. 1, cylinder head 11 comprises inter alia one or more intake channels 13 for providing the charge air-gaseous fuel mixture through an intake opening 13A into main combustion chamber 5, wherein that fluid connection is controllable via an intake valve configuration 15.

Cylinder head 11 further comprises one or more exhaust valve configurations 17 fluidly connecting main combustion chamber 5 with an exhaust gas system (not shown) via respective outlet openings.

As it is known in the art, respective intake valve configurations 15 and exhaust valve configurations 17 are each formed by a valve disk 19 connected to a valve stem 21 and are operated, for example, by rocker arm configurations. Specifically, valve disks 19 are configured to close intake opening 13A (or a respective exhaust opening) by forming a seal with a sealing face provided by cylinder head 11 (or in some embodiments, a valve sealing ring mounted to cylinder head 11).

Cylinder head 11 further comprises one or more pre-combustion chamber assemblies 31, for example positioned along a central axis 33 of main combustion chamber 5. Pre-combustion chamber assembly 31 is configured for igniting the charge air-gaseous fuel mixture within main combustion chamber 5. Specifically, the ignition is based on ignition jets 35 that are generated by a combustion initiated within a pre-combustion chamber 37 of pre-combustion chamber assembly 31 (see also Fig. 2). In general, pre-combustion chamber 37 is delimited by a pre-combustion chamber wall 37' from main combustion chamber 5. Pre-combustion chamber wall 37' comprises a series of flow transfer passages 39 through which a burning gaseous fuel air mixture, which was ignited within pre-combustion chamber 37, is released into main combustion chamber 5.

For example, pre-combustion chamber assembly 31 may provide several ignition jets 35 azimuthally distributed around central axis 33, wherein each ignition jet may extend up to the wall of main combustion chamber 5, e.g. over about 1% to 100 % of the radius of main combustion chamber such as at least 50 %.

As shown in Fig. 1 and Fig. 2, ignition jets 35 may not extend exactly in radial direction but under an inclination with respect to a radial direction R. Specifically, the inclination may be characterized by a first (azimuthal) inclination angle α that is defined within a plane orthogonal to central axis 33 and a (not required) second (elevation) inclination angle β defined within a plane along central axis 33.

For example, assuming that each ignition jet 35 has a (main) injection direction V_{J}, that injection direction V_{J} comprises an azimuthal inclination component V_{Jα} with respect to a respective radial direction R associated with an origin position of ignition jet 35.

To provide such an inclined extension of ignition jets 35 into main combustion chamber 5, flow transfer passages 39 may be inclined with respect to the radial direction R similar to the ignition jets in an azimuthal direction as well as in an elevation direction. For example, a central axis of the respective passage 39 may be inclined by the (azimuthal) angle α with respect to the respective radial direction associated with respective passage 39. The origin position of an ignition jet 35 and/or the radial direction of the through hole may be, for example, associated with an outlet side of the respective passage 39.

In addition, there may be second (elevation) inclination angle β with respect to the plane along central axis 33 by which ignition jets 35 are directed towards piston 9. Accordingly, ignition jets 35 reach into main combustion chamber 5. Thus, main injection direction V_{J} comprises an elevation inclination component V_{Jβ} with respect to a respective radial direction R.

For example, first (azimuthal) inclination angle α may be in the range of 5° to 85° such as around 45° and second (elevation) angle β may be in the range from 0° to 110° such as around 30°.

In some embodiments, all of ignition jets 35 (as well as for example all flow transfer passages 39) may be inclined by the same azimuthal angle α and/or the same elevation angle β with respect to a respective radial direction. In some embodiments, the azimuthal angel α and/or β of a respective ignition jet 35 (and for example a respective flow transfer passages 39) may be adapted to a specific flow direction V_{F} of a respective counter flow section C described below.

Moreover, the flow transfer passages will not need to have the same orientation. They could start in different layers and end in different layers. Furthermore, the distribution of flow transfer passages 39 could be asymmetrical with respect to pre-combustion chamber 37.

With respect to the angles defined above, the radial direction may be defined by radial vector R extending from central axis 33 through an outlet side of the respective flow transfer passages towards the cylinder liner 7 in a radial manner. Similarly, the origin position of an ignition jet 35 may be that outlet side of the respective flow transfer passage.

For the concept of aligned flow dynamics, in addition to the flow dynamic of ignition jets 35, a specific flow of the charge air-gaseous fuel mixture within combustion chamber 5 may be enforced. For example, the specific structure of intake channel 13 may enforce a swirl of the charge air-gaseous fuel mixture when passing through intake opening 13A. For example, the directionality of provided charge air-gaseous fuel mixture may be inclined accordingly (e.g. may have a tangential component).

An additional or alternative flow enforcement may be performed via a swirl section provided at a valve stem with at least one swirl generating element as disclosed below in connection with Figs. 3 to 5.

In addition or alternatively, a swirl generating element 41 (schematically indicated in Fig. 1) may be provided, for example close to intake opening 13A, as disclosed below in connection with Figs. 6 to 10.

In general, internal combustion engine 1 is based on a structure/structural configuration provided in particular in the intake path of the charge air-gaseous fuel mixture configured such that a flow system F of the charge air-gaseous fuel mixture forms within main combustion chamber 5.

For example, a single swirl is formed that provides a flow around central axis 33 of main combustion chamber 5. Accordingly, the charge air-gaseous fuel mixture flows along the side wall of main combustion chamber 5 in azimuthal direction as indicated in Fig. 1 by a "3D-like" indicated arrow (i.e. extending in and out of the plan of drawing) and in Fig. 2 by a sequence of arrows. It is noted, that the arrows are for illustration purposes only and illustrate that flow system F (exemplarily essentially a swirl system) comprises counter flow sections C that at least partly overlap with respective ignition jets 35. Counter flow sections C are defined by a flow direction V_{F} that is essentially directed against a respective injection direction V_{J} of the associated ignition jet 35. Accordingly, ignition jets 35 are confronted with a counter flow situation and reach a larger volume of charge air-gaseous fuel mixture for igniting the gaseous fuel-charge air mixture in a more complete manner as it would occur without a counter flow configuration.

As in general the ignited volume depends on the formation of the ignition jets and the velocity Vs of the counter flow section C, adapting the direction of ignition jets 35 to face the counter flow within the counter flow sections may improve the ignition.

Simulations and/or measurements of the flow system and, thus, a swirl system and/or a tumble system within the main combustion chamber may be performed based on specific parameters selected for a specific internal combustion engine. Accordingly, the extent and velocity distribution of the swirl within main combustion chamber 5 may be determined during the planning phase and set accordingly such that, including a respective adjustment of the flow transfer passages and respective ignition jet formation, the hereby disclosed counter flow concept is realized in the internal combustion engine.

In the following, embodiments are disclosed that may support formation of flow system F based on respective structure(s) provided at valve stem 21 and/or within intake channel 13.

In some embodiments of a pre-set swirl generation, providing a respective structure(s) provided at valve stem 21 and/or intake channel 13 may allow further adjustment of the swirl generation during operation, for example, by rotating valve stem 21 such as increasing or reducing the swirl generation.

A pre-set swirl generation may improve the combustion, for example, in lean burning Otto engines as the charge motion before ignition can be increased and specifically adapted, e.g. by imposing one or more swirls and or tumbles. This may be achieved by a special shaped valve stem that introduces swirl generating elements configured, for example, as radially extending rotor blades. The surface of those rotor blades may be tilted around a respective radial axis extending radially from valve stem, thereby, for example, enforcing a specific spinning flow around valve stem 21 upstream of intake opening 13A. That spinning flow from one or more intake valves may expand into main combustion chamber 5 and may impose one or more swirls or tumbles.

In Fig. 3, an exemplary configuration of such a structure and system for enforcing the formation of flow system F within main combustion chamber 5 is shown. A pair of intake channels 13 is provided with each intake valve configuration being based on respectively modified valve stems 21 for holding respective valve disks 19.

Specifically, valve stem 21 includes a swirl generation section 43. Swirl generation section 43 may be positioned close to the transition between valve stem 21 and valve disk 19, thereby affecting the flow within intake channel 13 close to intake opening 13A.

Swirl generation section 43 includes one or more swirl generating elements. In the embodiment of Fig. 3, two swirl generating elements 45A extend radially from the axis of valve stem 21 into intake channel 13 in opposite directions. Swirl generating elements 45A may be configured exemplarily as radially extending rotor blades that may have surface sections 47 being tilted around a respective radial axis extending radially from valve stem 21, thereby, for example, enforcing a specific spinning flow around valve stem 21 upstream of intake opening 13A.

Furthermore, as shown in Fig. 3, a rotation unit 51 for rotating valve stem 21 and, thereby, for influencing the formation of flow system F. In particular, rotation unit 51 is configured and controllable for aligning flow direction V_{F} of a respective counter flow section F with the respective injection directions V_{J} of the respective ignition jet 35. For example, rotation unit 51 may be used to optimize the respective angular orientation prior operation and/or may continuously adapt the same, for example, in line with applicable intake valve opening times and/or intake air pressures.

In some embodiments, rotation unit 51 may allow (for example continuously during operation) rotating valve stem 21 against the spinning direction generated by the valve stem's swirl generating elements 45A within intake channel 13 downstream of swirl generating section 43. Furthermore, for example changing the rotation direction and rotation velocity applied by the rotation unit 51 to valve stem 21, the swirls and/or tumbles may be increased or decreased and thereby adapted to the current operation mode of the engine.

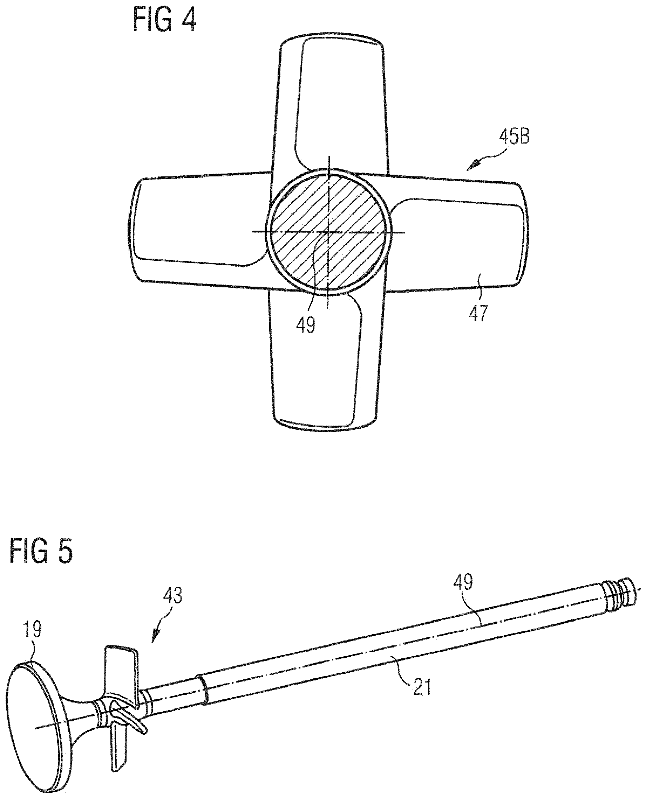

While in Fig. 3 swirl generating elements 45A are shown, Fig. 4 shows a further exemplary embodiment in a cut view through swirl generation section 43 and Fig. 5 shows the respective valve stem 21 with swirl generation section 43 and valve disk 19 in a three-dimensional view. As can be seen in those figures, swirl generation section 43 comprises exemplarily four swirl generating elements 45B equally distributed around a valve stem axis 49. In general, one or more swirl generating elements 45B may be provided.

In connection with Figs. 6 to 10, embodiments are disclosed that use swirl generating elements not mounted to the valve stem but instead being mounted to the wall of the intake channel.

Fig. 6 shows a cross-section of an intake channel system 40 for an internal combustion engine as shown, for example, in Fig. 1. In particular, intake channel system 40 comprises intake channel 13 and swirl generating elements 55A. The cross-section extends along a center axis 56A of intake channel 13 in the area of swirl generating elements 55A. In the exemplary embodiment, also a valve stem 21' extends along that center axis 56A.

Fig. 6 shows a cross section of an intake channel system 40 that is orthogonal to center axis 56A and cuts through swirl generating elements 55A.

In general, intake channel system 40 comprises a channel wall 53 delimiting intake channel 13. For example, channel wall 53 is integrated into a casted part such as a casted cylinder head or may be provided as an intake pipe.

Intake channel 13 provides a fluid passage fluidly connecting an inlet side 14A with an outlet side 14B of intake channel 13. Intake channel 13 is configured for passing an intake fluid such as an intake air gaseous fuel mixture to the engine block cylinder unit section. For example, outlet side 14B is fluidly connected to intake opening 13A to guide the intake fluid to main combustion chamber 5. Opening 13A may be closed by a valve disk 19' of valve stem 21' during operation of the engine.

As shown in Fig. 6 and Fig. 7, channel wall 53 comprises swirl generating elements 55A, which extend into intake channel 13 from four sides. As shown also in Fig. 7, swirl generating element 55A may in particular extend radially inward towards valve stem 21'. Exemplarily, a radial direction 56B with respect to center axis 56A of intake channel 13 at the region of swirl generating elements 55A is indicated in Fig. 7.

Swirl generating elements 55A comprise a surface section 47A facing against the through flow direction of the fluid. At least one surface section 47A maybe tilted around respective radial direction 56B. Moreover, surface section 47A and in particular the complete shape of swirl generating elements 55A may be selected to affect a desired swirl S within intake channel 13 downstream of swirl generating elements 55A.

As shown in Fig. 7, four swirl generating elements 55A may be arranged symmetrically around valve stem 21', thereby providing four essentially triangular shaped through-flow sections 57.

Charge air-gaseous fuel mixture passing along intake channel 13 will be partially deflected by surface sections 47A and pass through through-flow sections 57 thereby enforcing swirl S. The axis of rotation may usually coincide with center axis 56A of intake channel 13.

Swirl S will pass intake opening 13A and form flow system F such as a swirl system or tumble system within combustion chamber 5.

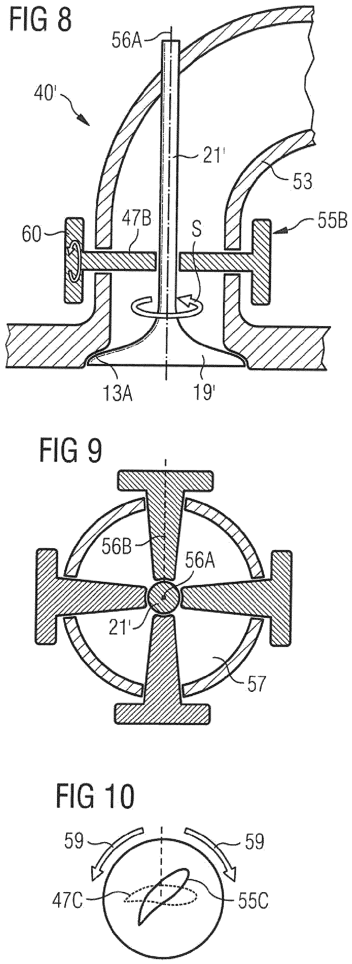

Figs. 8 and 9 show a further embodiment of an intake channel system 40' that provides more flexibility with respect to the generation of swirl S. Specifically, swirl S may be modified by changing the orientation of swirl generating elements 55B during the operation of the engine. Figs. 8 and 9 correspond to a cross section as shown in Figs. 6 and 7. Respective reference numerals are maintained were feasible.

In particular, swirl generating elements 55B are configured as separate elements that reach through channel wall 53 of intake channel 13. Accordingly, swirl generating elements comprise a portion within intake channel 13 providing again surface sections 47B. Swirl generating elements 55B are mounted in tiltable manner to channel wall 53 such that the tilt of surface section 47B can be adjusted by rotation of swirl generating element 55B. For example, swirl generating elements 55B may comprise portions that are positioned outside of channel wall 53 and that are configured to be rotatable by a tilt unit 60, exemplarily indicated in Fig. 8 for one swirl generating element 55B.

Accordingly, the orientation of swirl generating element 55B and, thus, surface sections 47B may be adjusted by varying the tilt angle. Thereby, the deflection of any flow of charge air-gaseous fuel mixture into through-flow sections 57may be modified and the extent and rotation speed of swirl S downstream of swirl generating elements 55B may be adjusted, for example in dependence of the operation mode.

Fig. 10 further illustrates that a swirl generating element 55C may be tilted as indicated by arrows 59 and the two position in through lines and dotted lines. Moreover, the cross-section of swirl-generating element 55C is indicated to have a profile to specifically affect a smooth deflection of charge air-gaseous fuel mixture, and thus a specific generation of swirl S.

In general, a rotation of swirl generating elements 55B, 55C may be achieved by one or more rotation units configured to individually or commonly adapt the tilt angle of surface sections 47B, 47C around radial direction 56B with respect to center axis 56A of intake channel 13.

### Industrial Applicability

The herein disclosed counter-flow configurations may allow operation of an internal combustion engine with ignition jets 35 being directed against the swirl direction, thereby increasing the turbulence level and the ignited volume within main combustion chamber 5. Furthermore, the herein disclosed concepts may allow adapting the flow system F during operation to adjust the same.

The description of a pre-chamber Otto-Gas engine is exemplary only. The described arrangement could olso be applied to a Diesel-Gas engine like a Micro-Pilot (Diesel) ignited Otto engine, or a Diesel ignited Dual-Fuel engine with one or two fluid injection systems. The ignition jets will be formed by the burning Diesel sprays, in particular extending through the charge air-gaseous fuel mixture within the main combustion chamber. The above discussed configurations of the transfer passages as well as the formation and orientation of the ignition jets will be equally applicable to these types of engines such as injector based engines using, for example, similar transfer passages fluidly connecting a chamber within the injector tip with the main combustion chamber.

With respect to the configurations of the swirl generating elements disclosed herein, in some configurations, an uneven distribution of swirl generating elements may be provided. The uneven distribution or shape may affect, for example, the passing charge air-gaseous fuel mixture asymmetrically with respect to intake opening, thereby creating an asymmetric passing of the charge air-gaseous fuel mixture by the valve disk.

In contrast to valve stems using rotor blades to move the valve stem during each opening so that the valve disk does not adhere to the cylinder head, the swirl generating elements as disclosed herein are configured to form a swirl covering essentially complete intake channel 13. For example, the swirl generating elements may extend at least over 50 % of the radius or may even essentially extend almost up to the wall of intake channel (e.g. up to 98 % of the radius intake channel 13 - assuming a circular intake channels).

## Claims

1. An internal combustion engine (1) for operation on at least partly gaseous fuel under adjusted flow dynamics, the engine (1) comprising:
an engine block cylinder unit section (3) providing a main combustion chamber (5); and
a cylinder head (11) covering the main combustion chamber (5), the cylinder head (11) comprising an intake channel (13) for providing a charge air-gaseous fuel mixture through an intake opening (13A) into the main combustion chamber (5) and an ignition source (31) for igniting the charge air-gaseous fuel mixture within the main combustion chamber (5), the ignition source (31) being configured for providing ignition jets (35) into the main combustion chamber (5) along injection directions (V_{J}), wherein
at least one of the injection directions (VJ) comprises an inclination component with respect to a respective radial direction (R) associated with an origin position of the ignition jet (35), and the ignition source (31) comprises a chamber (37) surrounded by a wall structure (37') with a plurality of flow transfer passages (39) formed in the wall structure (37') to fluidly connect the chamber (37) with the main combustion chamber (5), and
a central axis of at least one of the flow transfer passages (39) is inclined by an azimuthal inclination angle (α) with respect to the radial direction (R) associated with respective the flow transfer passage (39) and
the origin position of an ignition jet (35) and the central axis of the flow transfer passage (39) is associated with an outlet side of the respective flow transfer passage (39), **characterized in that** the internal combustion engine (1) is further configured to generate a flow system (F) of the charge air-gaseous fuel mixture within the main combustion chamber (5), the flow system (F) including at least one counter flow section (C) that at least partly spatially overlaps with a respective one of the ignition jets (35) and has a flow direction (V_{F}) directed at least partly against the respective injection direction (V_{J}).

2. The internal combustion engine (1) according to claim 1, wherein the intake channel (13) and/or the intake opening (13A) is configured to generate the flow system (F) and, in particular, include a swirl generating element (41).

3. The internal combustion engine (1) according to claim 1 or 2, further comprising:
a valve disk (19) connected to a valve stem (21) to form an intake valve system (15) together with the intake opening (13A), wherein the valve stem (21) comprises at least one swirl generating element (43A, 43B) extending into the intake channel (13), thereby deflecting the flow of the charge-air gaseous fuel mixture and generating the flow system (F) within main combustion chamber (5).

4. The internal combustion engine (1) according to claim 3, wherein the swirl generating element (45A, 45B) comprises a rotor blade with in particular a surface section (47) being tilted around a radial direction with respect to the valve stem (21).

5. The internal combustion engine (1) according to claim 3 or 4, further comprising
a rotation unit (51) for rotating the valve stem (21) for influencing the formation of the flow system (F) and in particular for aligning the flow direction (V_{F}) of the counter flow section (C) and the respective injection directions (V_{J}) of the ignition jets (35).

6. The internal combustion engine (1) according to any of the preceding claims, wherein
the chamber (37) is a pre-combustion chamber in case the ignition source is configured as a pre-combustion chamber assembly, or a fuel chamber in a nozzle in case the ignition source is configured as a liquid fuel injector.

7. The internal combustion engine (1) according to any of the preceding claims, wherein at least one of the injection directions (V_{J}) comprises an axial inclination component with respect to a central axis (33) associated with the main combustion chamber (5), and, in particular, an elevation inclination angle (β) with respect to a plane perpendicular to the central axis (33) of the main combustion chamber (5), and wherein in particular the azimuthal inclination angle (α) is in the range of 5° to 85° and/or the elevation inclination angle (β) is in the range from 0° to 110°.

8. The internal combustion engine (1) according to any of the preceding claims, wherein a vector associated with the injection directions (V_{J}) of ignition jet (35) and a vector associated with a flow direction (V_{F}) of a respective counter flow section (C), when overlapping with the ignition jet, extend under an angle of at least 90° such as at least 120°, at least 135°, at least 150°, or at least 170°, and wherein in particular the counter-flow condition is given for at least 50%, at least 70%, or at least 85% of the extent of the ignition jet (35).

9. The internal combustion engine (1) according to any one of claim 6 to claim 8, wherein all of the flow transfer passages (39) are inclined by the same azimuthal inclination angle (α) and/or the elevation inclination angle (β) with respect to a respective radial direction (R), or
wherein the azimuthal angel (α) and/or the elevation inclination angle (β) of a respective flow transfer passage (39) is adapted to the flow direction (V_{F}) of the respective counter flow section (C).

10. The internal combustion engine (1) according to any one of claim 6 to claim 9, wherein the azimuthal inclination angle (α) and/or the elevation inclination angle (β) of a respective ignition jet (35) and/or the respective flow transfer passages (39) are adapted to a specific flow direction (V_{F}) of a respective counter flow section (C), and/or
wherein the flow transfer passages (39) have specifically adjusted orientations such as starting points in different axial position and ending points in different axial positions and/or being asymmetrically distributed at the chamber (37).

11. The internal combustion engine (1) according to any of the preceding claims, wherein
the flow system (F) comprises a single swirl, for example providing a flow around the central axis (33) of the main combustion chamber (5), or multiple swirls, for example providing a flow around multiple axes at least one being displaced from the central axis (33) of the main combustion chamber (5), and/or one or more tumbles in the main combustion chamber (5).

12. The internal combustion engine (1) according to any of the preceding claims, further configured as a gaseous fuel operated engine with a pre-chamber, or pre-chamber spark plug (as part of the ignition source) or as a Diesel-Gas engine operable with liquid fuel and/or gaseous fuel such as a liquid fuel ignited open chamber dual fuel engine with one or more fuel injectors (as part of the ignition source), or a micro-pilot injection ignited pre-chamber Diesel-Gas or dual fuel engine.

13. A method for operating an internal combustion engine (1) at least partly on gaseous fuel under adjusted flow dynamics of the pre-combustion chamber (37) and the main combustion chamber (5), comprising:
providing ignition jets (35) of burning charge air-gaseous fuel mixture, or of burning charge air-gaseous fuel mixture in combination with burning Diesel sprays into a main combustion chamber (5) of the internal combustion engine (1) along injection directions (V_{J}) being azimuthally inclined with respect to respective radial directions; **characterized in** generating a flow system (F) of the charge air-gaseous fuel mixture within the main combustion chamber (5), the flow system (F) including counter flow sections (C) that at least partly spatially overlap with the ignition jets (35) and have a flow direction (V_{F}) directed at least partially against the respective injection directions (V_{J}).

14. The method according to claim 13, wherein at least one of the injection directions (V_{J}) comprises an elevation and inclination with respect to a respective radial direction, for example, associated with an origin position of the ignition jet (35) within the main combustion chamber (5) and/or an outlet side of a flow transfer passage (39) through a chamber wall (37') of an ignition source (37).

15. The method according to claim 13 or 14, wherein the step of generating the flow system (F) further comprises
providing at least one swirl generating element (45A, 45B) and/or swirl generating element (41) extending into the flow of an charge air-gaseous fuel mixture within an intake channel (13) of the internal combustion engine (1) prior guiding the charge air-gaseous fuel mixture into the main combustion chamber (5), thereby deflecting the flow through the intake channel (13) and generating the flow system (F) within the main combustion chamber (5).

## Patentansprüche

1. Brennkraftmaschine (1) zum Betrieb durch mindestens teilweise gasförmigen Treibstoff unter angepasster Fließdynamik, wobei die Maschine (1) umfasst:
einen Maschinenblockzylindereinheitsabschnitt (3), der eine Hauptverbrennungskammer (5) bereitstellt; und
einen Zylinderkopf (11), der die Hauptverbrennungskammer (5) bedeckt, wobei der Zylinderkopf (11) einen Ansaugkanal (13) zum Bereitstellen einer Ladung Luft-gasförmiger Treibstoffmischung durch eine Ansaugöffnung (13A) in die Hauptverbrennungskammer (5) und eine Zündungsquelle (31) zum Zünden der Ladung Luft-gasförmiger Treibstoffmischung innerhalb der Hauptverbrennungskammer (5) umfasst, wobei die Zündungsquelle (31) eingerichtet ist zum Bereitstellen von Zündungsjets (35) in die Hauptverbrennungskammer (5) entlang von Einspritzrichtungen (V_{J}), wobei
mindestens eine der Einspritzrichtungen (VJ) eine Neigungskomponente umfasst in Bezug auf eine entsprechende radiale Richtung (R), assoziiert mit einer Ursprungsposition des Zündungsjets (35), und wobei die Zündungsquelle (31) eine Kammer (37), umgeben von einer Wandstruktur (37') mit einer Vielzahl von Flusstransferpassagen (39), gebildet in der Wandstruktur (37'), um fluidtechnisch die Kammer (37) mit der Hauptverbrennungskammer (5) zu verbinden, umfasst, und
eine Zentralachse von mindestens einer der Flusstransferpassagen (39) mittels eines azimutalen Neigungswinkels (α) geneigt ist in Bezug auf die radiale Richtung (R), assoziiert mit der entsprechenden Flusstransferpassage (39) und
die Ursprungsposition eines Zündungsjets (35) und die Zentralachse der Flusstransferpassage (39) mit einer Auslassseite der entsprechenden Flusstransferpassage (39) assoziiert ist, **dadurch gekennzeichnet, dass**
die Brennkraftmaschine (1) weiter eingerichtet ist, um ein Flusssystem (F) der Ladung Luft-gasförmiger Treibstoffmischung innerhalb der Hauptverbrennungskammer (5) zu erzeugen, wobei das Flusssystem (F) mindestens einen Gegenflussabschnitt (C) einschließt, der mindestens teilweise räumlich mit einem entsprechenden der Zündungsjets (35) überlappt und eine Flussrichtung (V_{F}) hat, die mindestens teilweise gegen die entsprechende Einspritzrichtung (V_{J}) gerichtet ist.

2. Brennkraftmaschine (1) nach Anspruch 1, wobei der Ansaugkanal (13) und/oder die Ansaugöffnung (13A) eingerichtet ist, um das Flusssystem (F) zu erzeugen und, insbesondere, ein Wirbel erzeugendes Element (41) einzuschließen.

3. Brennkraftmaschine (1) nach Anspruch 1 oder 2, weiter umfassend:
einen Ventilteller (19), verbunden mit einem Ventilschaft (21), um ein Ansaugventilsystem (15) zusammen mit der Ansaugöffnung (13A) zu bilden, wobei der Ventilschaft (21) mindestens ein Wirbel erzeugendes Element (43A, 43B) umfasst, das sich in den Ansaugkanal (13) erstreckt, wodurch der Fluss der Ladung Luft-gasförmigen Treibstoffgemisches abgelenkt wird und ein Flusssystem (F) innerhalb der Hauptverbrennungskammer (5) erzeugt.

4. Brennkraftmaschine (1) nach Anspruch 3, wobei das Wirbel erzeugende Element (45A, 45B) ein Rotorblatt mit insbesondere einem Oberflächenabschnitt (47) umfasst, der um eine radiale Richtung in Bezug auf den Ventilschaft (21) gekippt ist.

5. Brennkraftmaschine (1) nach Anspruch 3 oder 4, weiter umfassend
eine Rotationseinheit (51) zum Rotieren des Ventilschafts (21) zum Beeinflussen der Formation des Flusssystems (F) und insbesondere zum Ausrichten der Flussrichtung (V_{F}) des Gegenflussabschnitts (C) und der entsprechenden Einspritzrichtungen (V_{J}) der Zündungsjets (35).

6. Brennkraftmaschine (1) nach einem der vorstehenden Ansprüche, wobei
die Kammer (37) eine Vorverbrennungskammer ist, im Falle, dass die Zündungsquelle als eine Vorverbrennungskammeranordnung eingerichtet ist, oder eine Treibstoffkammer in einer Düse, im Falle, dass die Zündungsquelle als ein Flüssigtreibstoffeinspritzer eingerichtet ist.

7. Brennkraftmaschine (1) nach einem der vorstehenden Ansprüche, wobei mindestens eine der Einspritzrichtungen (V_{J}) eine axiale Neigungskomponente in Bezug auf eine Zentralachse (33) umfasst, die mit der Hauptverbrennungskammer (5) assoziiert ist, und, insbesondere, einen Erhebungsneigungswinkel (β) in Bezug auf eine Ebene senkrecht zu der Zentralachse (33) der Hauptverbrennungskammer (5), und wobei insbesondere der azimutale Neigungswinkel (α) in dem Bereich von 5° bis 85° ist und/oder der Erhebungsneigungswinkel (β) in dem Bereich von 0° bis 110° ist.

8. Brennkraftmaschine (1) nach einem der vorstehenden Ansprüche, wobei ein Vektor, assoziiert mit den Einspritzrichtungen (V_{J}) des Zündungsjets (35) und ein Vektor, assoziiert mit einer Flussrichtung (V_{F}) eines entsprechenden Gegenflussabschnitts (C), wenn überlappend mit dem Zündungsjet, sich unter einem Winkel von mindestens 90°, wie mindestens 120°, mindestens 135°, mindestens 150°, oder mindestens 170°, erstrecken und wobei insbesondere die Gegenflussbedingung mindestens für 50%, mindestens für 70% oder mindestens für 85% des Ausmaßes des Zündungsjets (35) gegeben ist.

9. Brennkraftmaschine (1) nach einem der Ansprüche 6 bis 8, wobei alle der Flusstransferpassagen (39) unter demselben azimutalen Neigungswinkel (α) und/oder dem Erhebungsneigungswinkel (β) in Bezug eine entsprechende radiale Richtung (R) geneigt sind, oder wobei der azimutale Winkel (α) und/oder der Erhebungsneigungswinkel (β) einer entsprechenden Flusstransferpassage (39) an die Flussrichtung (V_{F}) des entsprechenden Gegenflussabschnitts (C) angepasst sind.

10. Brennkraftmaschine (1) nach einem der Ansprüche 6 bis 9, wobei der azimutale Neigungswinkel (α) und/oder der Erhebungsneigungswinkel (β) eines entsprechenden Zündungsjets (35) und/oder die entsprechenden Flusstransferpassagen (39) angepasst sind an eine spezifische Flussrichtung (V_{F}) eines entsprechenden Gegenflussabschnitts (C), und/oder
wobei die Flusstransferpassagen (39) speziell angepasste Orientierungen haben, wie Startpunkte in verschiedener axialer Position und Endpunkte in verschiedenen axialen Positionen und/oder asymmetrisch an der Kammer (37) verteilt sind.

11. Brennkraftmaschine (1) nach einem der vorstehenden Ansprüche, wobei
das Flusssystem (F) einen einzelnen Wirbel umfasst, zum Beispiel bereitstellend einen Fluss um die Zentralachse (33) der Hauptverbrennungskammer (5), oder multiple Wirbel, zum Beispiel bereitstellend einen Fluss um multiple Achsen, wobei mindestens eine von der Zentralachse (33) der Hauptverbrennungskammer (5) verrückt ist, und/oder eine oder mehrere Stürze in der Hauptverbrennungskammer (5).

12. Brennkraftmaschine (1) nach einem der vorstehenden Ansprüche, weiter eingerichtet als eine mit gasförmigem Treibstoff betriebene Maschine mit einer Vorkammer, oder einer Vorkammerzündkerze (als Teil der Zündungsquelle) oder als eine Diesel-Gas Maschine, betreibbar mit flüssigem Treibstoff und/oder gasförmigem Treibstoff wie eine mit flüssigem Treibstoff gezündete, offene Kammerbrennkraftmaschine mit zwei Treibstoffen mit einem oder mehreren Treibstoffeinspritzern (als Teil der Zündungsquelle), oder eine Mikropiloteinspritzung gezündete Vorkammer-Diesel-Gas-Maschine oder Maschine mit zwei Treibstoffen.

13. Verfahren zum Betreiben einer Brennkraftmaschine (1) durch mindestens teilweise gasförmigen Treibstoff unter angepasster Fließdynamik der Vorverbrennungskammer (37) und der Hauptverbrennungskammer (5), umfassend:
Bereitstellen von Zündungsjets (35) zum Verbrennen von Ladung Luft-gasförmiger Treibstoffmischung, oder zum Verbrennen von Ladung Luft-gasförmiger Treibstoffmischung in Verbindung mit Verbrennen von Diesel-Sprays in eine Hauptverbrennungskammer (5) der Brennkraftmaschine (1) entlang von Einspritzrichtungen (V_{J}), die azimutal in Bezug auf entsprechende radiale Richtungen geneigt sind; **gekennzeichnet durch**
Erzeugen eines Flusssystems (F) der Ladung Luft-gasförmiger Treibstoffmischung innerhalb der Hauptverbrennungskammer (5), wobei das Flusssystem (F) Gegenflussabschnitte (C) einschließt, die mindestens teilweise räumlich mit den Zündungsjets (35) überlappen und eine Flussrichtung (V_{F}) haben, die mindestens teilweise gegen die entsprechenden Einspritzrichtungen (V_{J}) gerichtet ist.

14. Verfahren nach Anspruch 13, wobei mindestens eine der Einspritzrichtungen (V_{J}) eine Erhebung und Neigung in Bezug auf eine entsprechende radiale Richtung umfasst, zum Beispiel assoziiert mit einer Ursprungsposition des Zündungsjets (35) innerhalb der Hauptverbrennungskammer (5) und/oder einer Auslassseite einer Flusstransferpassage (39) durch eine Kammerwand (37') einer Zündungsquelle (37).

15. Verfahren nach einem der Ansprüche 13 oder 14, wobei der Schritt des Erzeugens des Flusssystems (F) weiter umfasst
Bereitstellen mindestens eines Wirbel erzeugenden Elements (45A, 45B) und/oder eines Wirbel erzeugenden Elements (41), das sich in den Fluss einer Luft-gasförmigen Treibstoffmischung innerhalb eines Ansaugkanals (13) der Brennkraftmaschine (1) vor Führung der Ladung Luft-gasförmiger Treibstoffmischung in die Hauptverbrennungskammer (5) erstreckt, wodurch der Fluss durch den Ansaugkanal (13) abgelenkt wird und das Flusssystem (F) innerhalb der Hauptverbrennungskammer (5) erzeugt wird.

## Revendications

1. Moteur à combustion interne (1) pour fonctionnement sur un carburant au moins en partie gazeux dans le cadre d'une dynamique d'écoulement ajustée, le moteur (1) comprenant:
une section unitaire de cylindre de bloc-moteur (3) fournissant une chambre de combustion principale (5) ; et
une tête de cylindre (11) couvrant la chambre de combustion principale (5), la tête de cylindre (11) comprenant un canal d'admission (13) pour fournir un mélange de carburant gazeux et d'air de charge à travers une ouverture d'admission (13A) dans la chambre de combustion principale (5) et une source d'allumage (31) pour allumer le mélange de carburant gazeux et d'air de charge dans la chambre de combustion principale (5), la source d'allumage (31) étant configurée pour fournir des jets d'allumage (35) dans la chambre de combustion principale (5) le long de directions d'injection (V_{J}), dans lequel
au moins l'une des directions d'injection (VJ) comprend une composante d'inclinaison par rapport à une direction radiale respective (R) associée à une position d'origine du jet d'allumage (35), et la source d'allumage (31) comprend une chambre (37) entourée par une structure de paroi (37') avec une pluralité de passages de transfert d'écoulement (39) formés dans la structure de paroi (37') pour connecter en mode fluidique la chambre (37) à la chambre de combustion principale (5), et
un axe central d'au moins l'un des passages de transfert d'écoulement (39) est incliné d'un angle d'inclinaison azimutal (α) par rapport à la direction radiale (R) associée au passage de transfert d'écoulement respectif (39) et
la position d'origine d'un jet d'allumage (35) et l'axe central du passage de transfert d'écoulement (39) sont associés à un côté de sortie du passage de transfert d'écoulement respectif (39), **caractérisé en ce que**
le moteur à combustion interne (1) est en outre configuré pour générer un système d'écoulement (F) du mélange de carburant gazeux et d'air de charge dans la chambre de combustion principale (5), le système d'écoulement (F) incluant au moins une section de contre-écoulement (C) qui chevauche au moins en partie spatialement l'un respectif des jets d'allumage (35) et a une direction d'écoulement (V_{F}) dirigée au moins en partie à l'encontre de la direction d'injection respective (V_{J}).

2. Moteur à combustion interne (1) selon la revendication 1, dans lequel le canal d'admission (13) et/ou l'ouverture d'admission (13A) est ou sont configurés pour générer le système d'écoulement (F) et, en particulier, inclut ou incluent un élément générateur de tourbillons (41).

3. Moteur à combustion interne (1) selon la revendication 1 ou 2, comprenant en outre :
un disque de soupape (19) raccordé à une tige de soupape (21) pour former un système de soupape d'admission (15) conjointement avec l'ouverture d'admission (13A), dans lequel la tige de soupape (21) comprend au moins un élément générateur de tourbillons (43A, 43B) s'étendant dans le canal d'admission (13), déviant de la sorte l'écoulement du mélange de carburant gazeux et d'air de charge et générant le système d'écoulement (F) dans la chambre de combustion principale (5).

4. Moteur à combustion interne (1) selon la revendication 3, dans lequel l'élément générateur de tourbillons (45A, 45B) comprend une pale de rotor avec, en particulier, une section de surface (47) étant inclinée autour d'une direction radiale par rapport à la tige de soupape (21).

5. Moteur à combustion interne (1) selon la revendication 3 ou 4, comprenant en outre
une unité de rotation (51) pour faire tourner la tige de soupape (21) afin d'influencer la formation du système d'écoulement (F) et, en particulier, pour aligner la direction d'écoulement (V_{F}) de la section de contre-écoulement (C) et les directions d'injection respectives (V_{J}) des jets d'allumage (35).

6. Moteur à combustion interne (1) selon l'une quelconque des revendications précédentes, dans lequel
la chambre (37) est une chambre de précombustion dans le cas où la source d'allumage est configurée sous la forme d'un ensemble de chambre de précombustion, ou une chambre de carburant dans une buse dans le cas où la source d'allumage est configurée sous la forme d'un injecteur de carburant liquide.

7. Moteur à combustion interne (1) selon l'une quelconque des revendications précédentes, dans lequel au moins l'une des directions d'injection (V_{J}) comprend une composante d'inclinaison axiale par rapport à un axe central (33) associé à la chambre de combustion principale (5) et, en particulier, un angle d'inclinaison d'élévation (β) par rapport à un plan perpendiculaire à l'axe central (33) de la chambre de combustion principale (5), et dans lequel, en particulier, l'angle d'inclinaison azimutal (α) se situe dans la plage de 5° à 85° et/ou l'angle d'inclinaison d'élévation (β) se situe dans la plage de 0° à 110°.

8. Moteur à combustion interne (1) selon l'une quelconque des revendications précédentes, dans lequel un vecteur associé aux directions d'injection (V_{J}) du jet d'allumage (35) et un vecteur associé à une direction d'écoulement (V_{F}) d'une section de contre-écoulement respective (C), lors d'un chevauchement avec le jet d'allumage, s'étendent sous un angle d'au moins 90°, notamment d'au moins 120°, d'au moins 135°, d'au moins 150°, ou d'au moins 170°, et dans lequel, en particulier, la condition de contre-écoulement est appliquée pour au moins 50 %, au moins 70 %, ou au moins 85 % de l'extension du jet d'allumage (35).

9. Moteur à combustion interne (1) selon l'une quelconque de la revendication 6 à la revendication 8, dans lequel tous les passages de transfert d'écoulement (39) sont inclinés du même angle d'inclinaison azimutal (α) et/ou de l'angle d'inclinaison d'élévation (β) par rapport à une direction radiale respective (R), ou
dans lequel l'angle azimutal (α) et/ou l'angle d'inclinaison d'élévation (β) d'un passage de transfert d'écoulement respectif (39) est ou sont adaptés à la direction d'écoulement (V_{F}) de la section de contre-écoulement respective (C).

10. Moteur à combustion interne (1) selon l'une quelconque de la revendication 6 à la revendication 9, dans lequel l'angle d'inclinaison azimutal (α) et/ou l'angle d'inclinaison d'élévation (β) d'un jet d'allumage respectif (35) et/ou les passages de transfert d'écoulement respectifs (39) est ou sont adaptés à une direction d'écoulement spécifique (V_{F}) d'une section de contre-écoulement respective (C), et/ou
dans lequel les passages de transfert d'écoulement (39) ont des orientations spécifiquement ajustées telles que des points de départ dans une position axiale différente et des points d'achèvement dans différentes positions axiales et/ou asymétriquement distribuées dans la chambre (37).

11. Moteur à combustion interne (1) selon l'une quelconque des revendications précédentes, dans lequel
le système d'écoulement (F) comprend un seul tourbillon, par exemple, fournissant un écoulement autour de l'axe central (33) de la chambre de combustion principale (5), ou de multiples tourbillons, par exemple, fournissant un écoulement autour d'axes multiples dont au moins l'un est déplacé de l'axe central (33) de la chambre de combustion principale (5) et/ou un ou plusieurs renversements dans la chambre de combustion principale (5).

12. Moteur à combustion interne (1) selon l'une quelconque des revendications précédentes, configuré en outre sous la forme d'un moteur fonctionnant au carburant gazeux avec une préchambre, ou d'une bougie d'allumage de préchambre (en tant que partie de la source d'allumage) ou d'un moteur à gazole fonctionnant au carburant liquide et/ou au carburant gazeux, notamment un moteur à carburant double à chambre ouverte allumée par carburant liquide avec un ou plusieurs injecteurs de carburant (en tant que partie de la source d'allumage) ou un moteur à gazole ou à carburant double à préchambre allumée par injection micropilote.

13. Procédé de fonctionnement d'un moteur à combustion interne (1) au moins en partie sur du carburant gazeux dans le cadre d'une dynamique d'écoulement ajustée de la chambre de précombustion (37) et de la chambre de combustion principale (5), comprenant :
la fourniture de jets d'allumage (35) de combustion d'un mélange de carburant gazeux et d'air de charge, ou de combustion d'un mélange de carburant gazeux et d'air de charge en combinaison avec la combustion de jets pulvérisés de diesel dans une chambre de combustion principale (5) du moteur à combustion interne (1) le long de directions d'injection (V_{J}) qui sont inclinées au plan azimutal par rapport aux directions radiales respectives ; **caractérisé par** :
la génération d'un système d'écoulement (F) du mélange de carburant gazeux et d'air de charge dans la chambre de combustion principale (5), le système d'écoulement (F) incluant des sections de contre-écoulement (C) qui chevauchent au moins en partie spatialement les jets d'allumage (35) et ont une direction d'écoulement (V_{F}) dirigée au moins en partie à l'encontre des directions d'injection respectives (V_{J}).

14. Procédé selon la revendication 13, dans lequel au moins l'une des directions d'injection (V_{J}) comprend une élévation et une inclinaison par rapport à une direction radiale respective, par exemple, associée à une position d'origine du jet d'allumage (35) dans la chambre de combustion principale (5) et/ou à un côté de sortie d'un passage de transfert d'écoulement (39) à travers une paroi de chambre (37') d'une source d'allumage (37).

15. Procédé selon la revendication 13 ou 14, dans lequel l'étape de génération du système d'écoulement (F) comprend en outre
la fourniture d'au moins un élément générateur de tourbillons (45A, 45B) et/ou d'un élément générateur de tourbillons (41) s'étendant dans l'écoulement d'un mélange de carburant gazeux et d'air de charge dans un canal d'admission (13) du moteur à combustion interne (1) avant de guider le mélange de carburant gazeux et d'air de charge dans la chambre de combustion principale (5), déviant de la sorte l'écoulement à travers le canal d'admission (13) et générant le système d'écoulement (F) dans la chambre de combustion principale (5).
